# EUROPEAN PATENT APPLICATION

(11) **EP 1 345 106 A2**
(43) Date of publication of application: **17.09.2003**
(21) Application number: 03251483.8
(22) Date of filing: 12.03.2003
(51) Int. Cl.: G06F 1/00

(54) **Systems and methods for authenticating a user for a computing device**

(30) Priority: 15.03.2002 US 98837
(71) Applicant: Hewlett-Packard Company, Palo Alto, CA 94303 (US)
(72) Inventor: Hersh, Kevin, Fort Collins, CO 80524 (US)
(74) Representative: Tollett, Ian

(57) **Abstract**

Systems and methods for authenticating a user for a computing device (100) are provided. One embodiment provides a method for authenticating a user for a computing device (100). One such method comprises the steps of: determining a user authentication sequence associated with the user and the computing device (100), the user authentication sequence defining a sequence in which at least one non-alphanumeric user interface input (116) associated with the computing device (100) must be engaged in order to authenticate the user; and authenticating the user when the at least one non-alphanumeric user interface input (116) is engaged in conformance with the user authentication sequence.

## Description

The present invention is generally related to systems and methods for authenticating a user for a computing device.

Currently, there are a variety of computing devices which enable a user to prevent other individuals from operating the computing device and/or accessing data and/or applications on the computing device. For instance, computing devices, such as personal computers (PCs) and laptops, typically have a security, or password, feature that enables a user to specify an alphanumeric password that may be used to authenticate the user in a variety of situations. The user may be required to enter the alphanumeric password via a computer keyboard in order to, for example, operate the computer, log on to a computer network, access certain applications, access specific data and/or records, *etc.*

As technology has advanced, portable computing devices have become more and more popular. For instance, there are a variety of handheld computing devices that provide any of a variety of applications. Examples of such devices include a personal digital assistant (PDA), mobile telephone, portable media player and/or recorder, *etc.* Some current PDAs provide a security application by which a user may prevent other individuals from operating the device and/or accessing particular records on the device. For instance, some such devices may provide a "System Lockout" feature whereby the user may prevent others from operating the device without a user-specified password. The user may specify the password, which consists of a sequence of alphanumeric characters, by inputting the characters via a touch-sensitive screen (either by using a character recognition feature or an on-screen keyboard feature). When the user engages this functionality, the device is turned off, and the next time the device is turned on, access to the device is only provided if the appropriate password is input via the touch screen. Some such devices may also enable a user to designate certain records and/or similar user data on the PDA as "Private." When the appropriate functionality of the security application is enabled, access to the data marked as "Private" will be locked until the user password is entered via the touch screen.

Existing methods of authenticating a user for a computing device may be problematic. For instance, such methods require that a user input only alphanumeric characters corresponding to a predetermined security password. This problem may be increased for portable computing devices. With smaller devices, accurately inputting alphanumeric characters may be more difficult due to the reduced size required for alphanumeric inputs and the increased difficulty in reading smaller display screens.

Thus, there is a need in the industry to address these deficiencies and inadequacies.

The present invention provides systems and methods for authenticating a user for a computing device.

Briefly, one embodiment provides a method for authenticating a user for a computing device. One such method comprises the steps of: determining a user authentication sequence associated with the user and the computing device, the user authentication sequence defining a sequence in which at least one non-alphanumeric user interface input associated with the computing device must be engaged in order to authenticate the user; and authenticating the user when the at least one non-alphanumeric user interface input is engaged in conformance with the user authentication sequence.

The present invention may also be viewed as providing a computer program for authenticating a user for a computing device. Briefly described, one such computer program may comprise logic configured to: determine a user authentication sequence associated with the user and the computing device, the user authentication sequence defining a sequence in which at least one non-alphanumeric user interface input associated with the computing device must be engaged in order to authenticate the user; and authenticate the user when the at least one non-alphanumeric user interface input is engaged in conformance with the user authentication sequence.

Briefly described, another embodiment is a computing device having at least one non-alphanumeric user interface inputs. The computing device may comprise logic configured to: determine a user authentication sequence associated with the user and the computing device, the user authentication sequence defining a sequence in which the at least one non-alphanumeric user interface input must be engaged in order to authenticate the user; and authenticate the user when the at least one non-alphanumeric user interface input is engaged in conformance with the user authentication sequence.

The invention can be better understood with reference to the following drawings. The components in the drawings are not necessarily to scale, emphasis instead being placed upon clearly illustrating a number of preferred embodiments of the present invention. Moreover, in the drawings, like reference numerals designate corresponding parts throughout the several views.
FIG. 1 is a block diagram of an embodiment of a computing device in which a user authentication module according to the present invention may be implemented.
FIG. 2 is a front perspective view of a representative embodiment of the computing device of FIG. 1 according to the present invention.
FIG. 3 is a flow chart illustrating the architecture, functionality, and/or operation of an embodiment of the user authentication module of FIG. 1 according to the present invention.
FIG. 4 is a table illustrating an embodiment of the user authentication data of FIG. 1 according to the present invention.

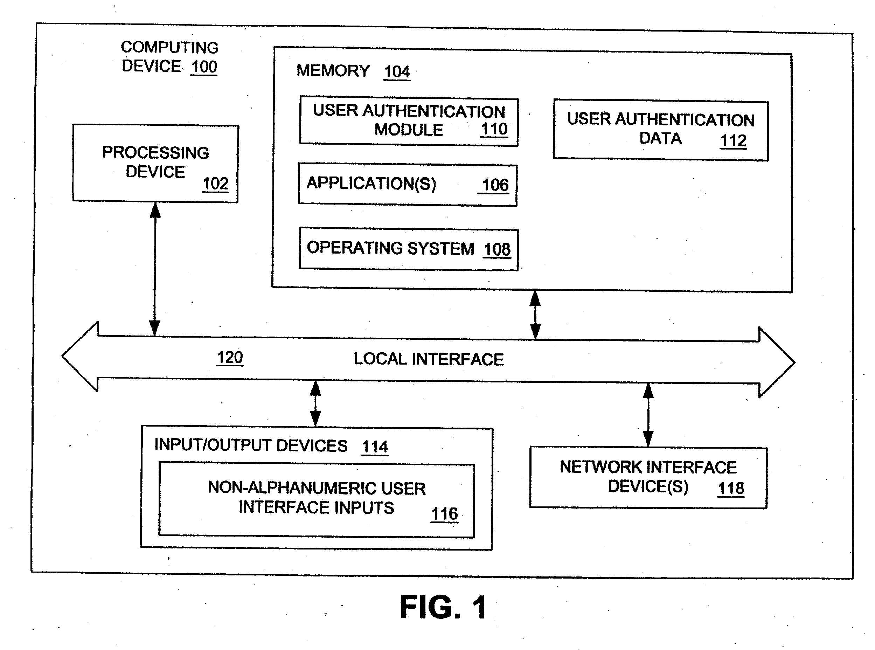

FIG. 1 is a block diagram of a computing device 100 in which a user authentication module 110 according to the present invention may be implemented. As described in more detail below, user authentication module 110 enables computing device 100 to authenticate a user without the user having to input a plurality of alphanumeric characters corresponding to a predetermined security password. User authentication module 110 enables a user to be authenticated when the user engages one or more non-alphanumeric user interface inputs in a manner consistent with a predetermined user authentication sequence. In this manner, user authentication module 110 enables a user to prevent other individuals from operating the computing device 100, accessing one or more applications 106, and/or accessing user-selected data stored on the computing device 100 unless the user properly engages the one or more non-alphanumeric user interface inputs in the manner specified in the user authentication sequence.

Referring to FIG. 1, computing device 100 may comprise a processing device 102, memory 104, one or more input/out devices 114 (at least one of which is a non-alphanumeric user interface input 116), and a network interface device 118 interconnected via a local interface 120. Memory 104 may comprise an operating system 108, one or more applications 106, a user authentication module 110, and user authentication data 112.

One of ordinary skill in the art will appreciate that user authentication module 110 may be implemented in any of a variety of types of computing devices. For example, in certain embodiments, computing device 100 may be a personal computer (PC), laptop, server, workstation, *etc.* In other embodiments, computing device 100 may be a portable computing device, such as a mobile telephone, a pager, a digital media player and/or recorder, such as an MP3 player, a portable video game system, a personal digital assistant (PDA), and other appliance-based computing devices, to name a few. One of ordinary skill in the art will further appreciate that computing device 100 may be an integrated device that combines the functionality of two or more such devices. For instance, computing device 100 may combine the functionality of a PDA with an MP3 player and/or a mobile telephone.

Depending on the particular configuration and/or type of computing device 100 in which user authentication module 110 is implemented, computing device 100 may comprise additional components not illustrated in FIG. 1. Furthermore, in certain embodiments, computing device 100 may not include all of the components illustrated in FIG. 1. For example, computing device 100 need not comprise a network interface device 118 and an operating system 108.

Referring again to FIG. 1, the various components of computing device 100 will be described. Local interface 120 may be, for example but not limited to, one or more buses or other wired or wireless connections. Local interface 120 may comprise additional elements, which are omitted for simplicity, such as controllers, buffers (caches), drivers, repeaters, and receivers, to enable communications. Further, local interface 120 may include address, control, and/or data connections to enable appropriate communications among processing device 102, memory 104, input/output devices 114, network interface device 118, and any other components included in computing device 100.

Memory 104 may include any one or combination of volatile memory elements and nonvolatile memory elements. Memory 104 may incorporate electronic, magnetic, optical, and/or other types of storage media. Memory 104 may also have a distributed architecture, where various components are situated remote from one another, but may be accessed by the processing device 102. As stated above, memory 104 may comprise an operating system 108, one or more applications 106, a user authentication module 110, and user authentication data 112.

Again, depending on the particular configuration and/or type of computing device 100 in which user authentication module 110 is implemented, operating system 108 may be any operating systems, now known or later developed. Operating system 120 essentially controls the execution of other computer programs, such as the applications 106 and user authentication module 110, and provides scheduling, input-output control, file and data management, memory management, and communication control and related services.

Processing device 102 may be a hardware device for executing software located in memory 104. Processing device 102 may be any custom made or commercially available processor, a central processing unit (CPU), a semiconductor based microprocessor (in the form of a microchip or chip set), a macroprocessor, or generally any device for executing software instructions.

Network interface device(s) 118 may be any device configured to facilitate communication between computing device 100 and a communication network, such as a public or private packet-switched or other data network including the Internet, a circuit switched network, such as the public switched telephone network, a wireless network, an optical network, or any other desired communications infrastructure. Input/output devices 114 may comprise any device configured to communicate with local interface 120.

As illustrated in FIG. 1, computing device 100 also comprises one or more non-alphanumeric user interface inputs 116, which are used in combination with user authentication module 110 to authenticate a user. Non-alphanumeric user interface inputs 116 are a sub-set of input/output devices 114. In general, a non-alphanumeric user interface input 116 is any control device configured to be engaged by a user and thereby convey non-alphanumeric information to computing device 100. In other words, the information conveyed to computing device 100 when a non-alphanumeric user interface input 116 is engaged does not comprise text letters and/or numerals.

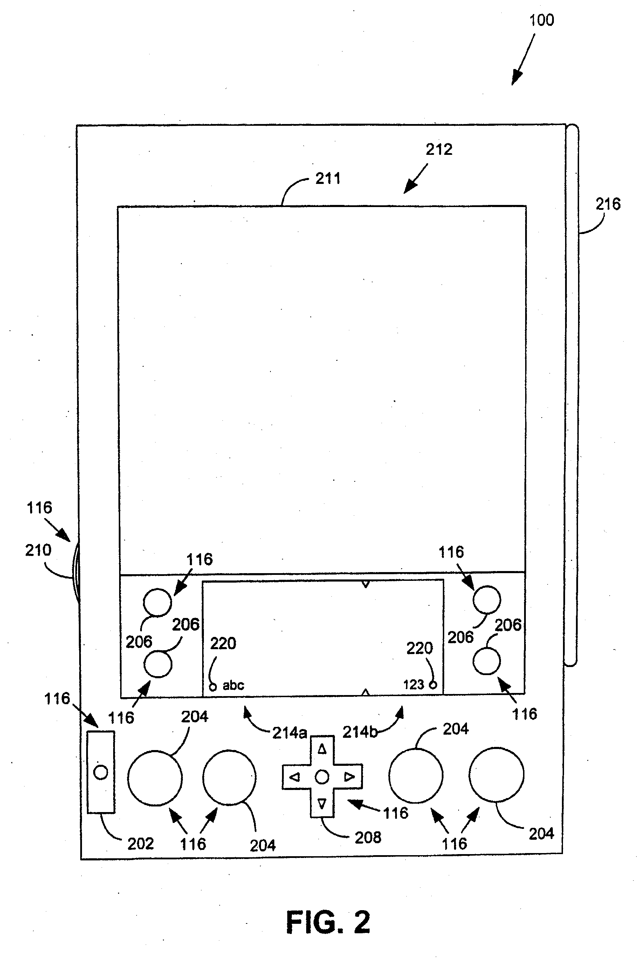

In structure, non-alphanumeric user interface inputs 116 may be configured as an electrical, optical, and/or mechanical input device. In certain embodiments, non-alphanumeric user interface inputs 116 may be any of the following devices that are manufactured as part of the computing device 100: an on/off switch or button, a navigational button configured to enable user selection via a display screen, a hardware button or switch configured to initiate a predetermined function and/or application 106, a virtual button or switch associated with a touch-sensitive screen, a scroll dial, *etc.* In other embodiments, non-alphanumeric user interface inputs 116 may be any of the following devices that are included as part of an input/output device 114: a button associated with a mouse, a navigational button associated with a mouse, a scroll dial associated with a mouse, a non-alphanumeric key on a computer keyboard, such as a function key, a hardware button associated with a computer keyboard *(e.g.* a hot button configured to launch a predetermined application 106, a control button, *etc.),* a control button associated with a computer monitor, *etc.* As stated above, user authentication module 110 according to the present invention may be implemented in any computing device that has at least one non-alphanumeric user interface input 116. By way of example, FIG. 2 illustrates a front perspective view of a representative embodiment of a computing device 100 configured as a portable computing device, such as a PDA. As illustrated in FIG. 2, the portable computing device 100 may comprise various non-alphanumeric user interface inputs 116, such as touch-sensitive screen 212, virtual buttons 206, scroll dial 210, on/off button 202, hardware buttons 204, navigational button 208, and antenna 216.

Touch-sensitive screen 212 may enable a user to interface with applications 106 and may comprise a display portion 211, text input areas 214a and 214b, and one or more virtual buttons 206. As known in the art, information related to applications 106 may be displayed on display portion 211 and a user may interact with applications 106 by touching the display portion 211 using a stylus or by actually touching the screen. A user may also input characters (input area 214a) and numbers (input area 214b) by using a character recognition feature and/or via an on-screen keyboard, which may be initiated by touching areas 220. A user may also initiate a predetermined function and/or application 106 by touching virtual buttons 206. One of ordinary skill in the art will appreciate that additional virtual buttons 206 may be displayed in display portion 211.

A user may also initiate a predetermined function and/or application 106 by depressing hardware buttons 204. Portable computing device 100 may be turned on and off via button/switch 202. Scroll dial 210 and navigational button 208 may enable a user to scroll or navigate within various screens related to applications 108.

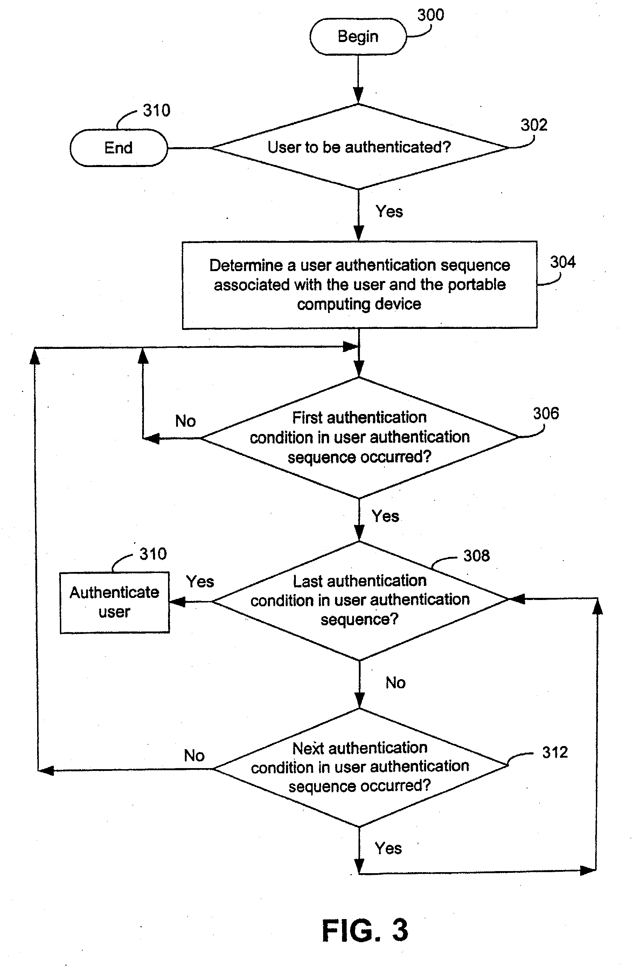

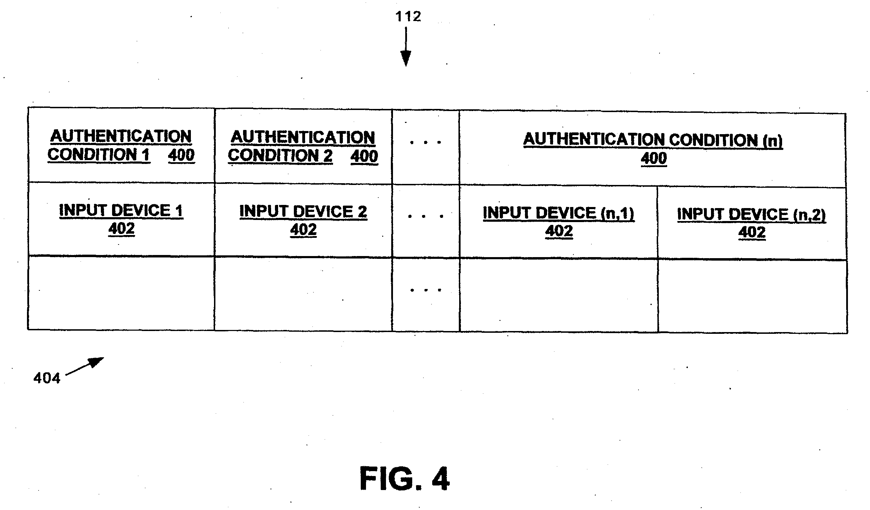

Referring to FIGS. 3 and 4, user authentication module 110 and user authentication data 112 according to the present invention will be described. User authentication module 110 and user authentication data 112 maybe implemented in hardware, software, firmware, or a combination thereof. As illustrated in FIG. 1, in one of a number of possible embodiments, user authentication module 110 and user authentication data 112 may be implemented in software or firmware that is stored in memory 104 and executed by processing device 102 or any other suitable instruction execution system. If implemented in hardware, as in alternative embodiments, user authentication module 110 and user authentication data 112 may be implemented with any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), *etc.*

FIG. 3 is a flow chart illustrating the architecture, functionality, and/or operation of an embodiment of user authentication module 110 according to the present invention. In general, user authentication module 110 performs the following functions: (1) determines a user authentication sequence associated with the user and the computing device; and (2) authenticates the user when at least one non-alphanumeric user interface inputs are engaged in conformance with the user authentication sequence. As described in more detail below, the user authentication sequence defines a sequence in which at least one non-alphanumeric user interface inputs 116 associated with the computing must be engaged in order to authenticate the user.

Referring to FIG. 3, user authentication module 110 begins at block 300. At decision block 302, user authentication module 110 determines whether a user is to be authenticated. One of ordinary skill in the art will appreciate that user authentication module 110 may be initiated in a number of circumstances. For example, user authentication module 110 may be initiated by a function call from operating system 108 and/or applications 106, by engagement of a user interface device, or in any other situation in which it is desirable to authenticate a user. User authentication module 110 may be initiated when computing device 100 is turned on, when a user attempts to log onto a communications network, when a user interface device is engaged, when an application 106 is launched, when a user attempts to access certain data stored on the computing device 100, *etc.*

If a user is not to be authenticated, the process may terminate at block 301. If a user is to be authenticated, at block 304, user authentication module 110 determines a user authentication sequence associated with the user and the computing device 100. The user authentication sequence defines a sequence in which at least one non-alphanumeric user interface inputs 116 associated with computing device 100 must be engaged in order for the user to be authenticated. The user authentication sequence may be specified and/or edited by a user and may be stored in memory 104 in user authentication data 112. One of ordinary skill in the art will appreciate that the user authentication sequence may be configured in a number of ways provided that user authentication module 110 may determine the sequence in which the non-alphanumeric user interface inputs 116 must be engaged. Although not illustrated in FIG. 3, it will be appreciated further that user authentication module 110 may include functionality for dealing with the contingency in which the user fails to enter the proper authentication sequence.

FIG. 4 is table illustrating an embodiment of the user authentication data 112 according to the present invention. User authentication data 112 may comprise at least one numbered authentication conditions represented by columns 400, which define the user authentication sequence. Each authentication condition identifies at least one non-alphanumeric user interface inputs 116 (represented by sub-columns 402), which must be engaged by the user. The user authentication sequence for a particular user may be stored in the data fields of a row 404. Each of the data fields in row 404 may contain a unique identifier corresponding to one of the non-alphanumeric user interface inputs 116. In this manner, user authentication module 110 may determine the manner in which the one or more non-alphanumeric user interface inputs 116 are to be engaged by the user by accessing the unique identifiers in row 404. User authentication data 112 may support user authentication sequences for multiple users for a single computing device 100 by adding additional rows 404.

At decision blocks 306, 308 and 312, user authentication module 110 determines whether the appropriate non-alphanumeric user interface inputs 116 are engaged by the user in conformance with the user authentication sequence. If the appropriate non-alphanumeric user interface inputs 116 are engaged in the manner prescribed by the user authentication sequence, at block 310, the user is authenticated. Depending on the manner in which user authentication module 110 is initiated (*e.g.* by a function call from operating system 108, applications 106, *etc.*), a user may be authenticated in a number of ways. For example, where user authentication module 110 is initiated by a function call from operating system 108 or an application 106, at block 310, user authentication module 110 may simply relinquish control to the operating system 108 or application 106 with notification that the user has been authenticated. In other embodiments, user authentication module 110 may be further configured to control the action for which authentication is requested.

Any process descriptions or blocks in FIG. 3 should be understood as representing modules, segments, or portions of code which include at least one executable instruction for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art.

In addition, user authentication module 110 and user authentication data 112, which comprise an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means, now known or later developed, that can contain, store, communicate, propagate, or transport the program for use by or in connection with the instruction execution system, apparatus, or device. The computer-readable medium can be, for example but not limited to, an electronic, magnetic, optical, electromagnetic, infrared, or semiconductor system, apparatus, device, or propagation medium. Note that the computer readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

It should be emphasized that the above-described embodiments of user authentication module 110 and user authentication data 112, particularly, any "preferred" embodiments, are merely possible examples of implementations.

## Claims

1. A method for authenticating a user for a computing device (100), the method comprising the steps of:
determining a user authentication sequence associated with the user and the computing device (100), the user authentication sequence comprising a sequence in which at least one non-alphanumeric user interface input (116) associated with the computing device (100) must be engaged in order to authenticate the user; and
authenticating the user when the at least one non-alphanumeric user interface input (116) is engaged in conformance with the user authentication sequence.

2. The method of claim 1, wherein the computing device (100) is a portable computing device.

3. The method of claim 1, wherein at least one of the at least one non-alphanumeric user interface input (116) comprises a depressible button (204), a scroll dial (210), a navigational button (208) or any combination thereof.

4. The method of claim 1, wherein the computing device (100) comprises a touch screen (212) and at least one non-alphanumeric user interface input (116) comprises a virtual button (206) displayed on the touch screen (212).

5. The method of any preceding claim, wherein the step of determining the user authentication sequence comprises accessing user authentication data (112) stored in a memory (104).

6. A system for authenticating a user for a computing device (100), the system comprising:
means for determining a user authentication sequence associated with the user and the computing device (100), the user authentication sequence comprising a sequence in which at least one non-alphanumeric user interface input (116) associated with the computing device (100) must be engaged in order to authenticate the user; and
means for authenticating the user when the at least one non-alphanumeric user interface input (116) is engaged in conformance with the user authentication sequence.

7. A computing device (100) having at least one non-alphanumeric user interface input (116), the computing device (100) comprising:
logic configured to:
determine a user authentication sequence associated with the user and the computing device (100), the user authentication sequence comprising a sequence in which the at least one non-alphanumeric user interface input (116) must be engaged in order to authenticate the user; and
authenticate the user when the at least one non-alphanumeric user interface input (116) is engaged in conformance with the user authentication sequence.

8. The computing device of claim 7, wherein the logic is software stored in a memory (104) and further comprising a processor device (102) for implementing the logic.

9. The computing device of claims 7 or 8, wherein the computing device (100) is a personal digital assistant.

10. The computing device of any of claims 7 to 9, wherein the one or more non-alphanumeric user interface inputs (116) comprises a depressible button (204), a scroll dial (210), a navigational button (208) or any combination thereof.
